(19) Europäisches Patentamt
European Patent Office
Office européen des brevets

(11) EP 4 588 944 A1

(12) **EUROPEAN PATENT APPLICATION**
published in accordance with Art. 153(4) EPC

(43) Date of publication:
**23.07.2025 Bulletin 2025/30**

(21) Application number: **23881822.3**

(22) Date of filing: **24.10.2023**

(51) International Patent Classification (IPC):
***C08F 10/00*** *(2006.01)* ***C08F 10/06*** *(2006.01)*
***C08F 4/649*** *(2006.01)* ***C08F 4/654*** *(2006.01)*

(52) Cooperative Patent Classification (CPC):
**C08F 4/649; C08F 4/654; C08F 10/00; C08F 10/06**

(86) International application number:
**PCT/CN2023/126144**

(87) International publication number:
**WO 2024/088244 (02.05.2024 Gazette 2024/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.10.2022 CN 202211302325**
**27.10.2022 CN 202211322445**

(71) Applicants:
- **China Petroleum & Chemical Corporation**
**Beijing 100728 (CN)**
- **Sinopec (Beijing) Research Institute of Chemical Industry Co., Ltd.**
**Beijing 100013 (CN)**

(72) Inventors:
- **LING, Yongtai**
**Beijing 100013 (CN)**
- **ZHOU, Junling**
**Beijing 100013 (CN)**
- **FENG, Zaixing**
**Beijing 100013 (CN)**
- **ZHANG, Xiaofan**
**Beijing 100013 (CN)**
- **XIA, Xianzhi**
**Beijing 100013 (CN)**
- **LIU, Yuexiang**
**Beijing 100013 (CN)**
- **YI, Zhuo**
**Beijing 100013 (CN)**
- **ZHAO, Jin**
**Beijing 100013 (CN)**
- **XIE, Lunjia**
**Beijing 100013 (CN)**
- **CHEN, Long**
**Beijing 100013 (CN)**
- **REN, Chunhong**
**Beijing 100013 (CN)**
- **XIE, Jijia**
**Beijing 100013 (CN)**
- **YANG, Rui**
**Beijing 100013 (CN)**
- **GAO, Futang**
**Beijing 100013 (CN)**
- **LIU, Tao**
**Beijing 100013 (CN)**
- **LI, Weili**
**Beijing 100013 (CN)**
- **DU, Chao**
**Beijing 100013 (CN)**
- **TAN, Yang**
**Beijing 100013 (CN)**
- **MA, Changyou**
**Beijing 100013 (CN)**

(74) Representative: **Hoffmann Eitle**
**Patent- und Rechtsanwälte PartmbB**
**Arabellastraße 30**
**81925 München (DE)**

# (54) CATALYST COMPONENT FOR OLEFIN POLYMERIZATION, PREPARATION METHOD THEREFOR AND USE THEREOF

(57) The present invention relates to an olefin polymerization catalyst, and disclosed are a catalyst component for olefin polymerization, a preparation method therefor and a use thereof. The catalyst component of the present invention comprises elemental magnesium, elemental titanium and an internal electron donor; the internal electron donor comprises a phosphate ester, and an $\alpha$-cyanosuccinate and/or a substituted $\alpha$-cyanosuccinate, a molar ratio of the phosphate ester to the elemental magnesium being 0.0002-0.002:1. When the cat-

alyst is used for olefin polymerization, especially for propylene polymerization, the obtained polymer has the characteristics of a high Z+1 average molecular weight and a good balance of rigidity and toughness.

## Description

### CROSS-REFERENCE TO RELATED APPLICATIONS

The application claims the benefits of the Chinese patent application No. "202211302325.6", filed on October 24, 2022, and the Chinese patent application No. "202211322445.2", filed on October 27, 2022, the contents of which are specifically and entirely incorporated herein by reference.

### TECHNICAL FIELD

The invention belongs to the field of olefin polymerization catalysts, in particular to a catalyst component for olefin polymerization and a preparation method therefor and use thereof.

### BACKGROUND ART

The discovery and use of an internal electron donor is an important milestone in the development history of polypropylene catalysts, and the internal electron donor technology is also one of the core technologies of polypropylene catalysts. Different electron donor compounds have a significant influence on the properties of the catalysts and polymers. The initially used benzoic acid ester compound has low activity and isotactic index. The phthalate ester compound developed afterward as an internal electron donor has greatly improved the activity and stereoscopic orientation capacity of said catalyst. However, the catalyst has a low hydrogen adjusting sensitivity, thus a diether compound has been developed as an internal electron donor of the propylene polymerization catalyst. However, the molecular weight distribution of the polypropylene resin obtained from the polypropylene catalyst prepared with the catalyst is narrow. The molecular weight distribution will affect the properties of the polypropylene resin.

The diol ester compounds and 2,3-dihydrocarbylsuccinate compounds are used as internal electron donors in CN1453298A and CN1313869A, respectively, although the molecular weight distribution of polypropylene resins obtained from the catalysts is broader than the phthalic compounds, the range of the molecular weight distribution is relatively limited. CN102146146A further modifies the molecular weight distribution of the polymer product by compounding the internal electron donor with other types of internal electron donor such as diether, and ortho-methoxybenzoate. However, the resulting polyolefin has a low Z+1 average molecular weight and a poor balance of rigidity and toughness.

### SUMMARY OF THE INVENTION

The present invention aims to overcome the defects in the prior art that the polyolefin has a low Z+1 average molecular weight and a poor balance of rigidity and toughness and provides a catalyst component for olefin polymerization and a preparation method therefor and use thereof.

Among the existing olefin polymerization catalysts, the phosphate ester is generally used as a solvent with a large dosage in the preparation process, the present inventors have unexpectedly discovered that the Z+1 average molecular weight (hereinafter abbreviated as Mz+1) of the olefin polymerization product can be improved by compounding the phosphate ester with the $\alpha$-cyanosuccinate and/or substituted $\alpha$-cyanosuccinate as an internal electron donor and controlling the molar ratio of the phosphate ester and the elemental magnesium, which is beneficial to forming more frenulums / intercrystalline bridging chains in the polymer, thereby endowing the product with desirable properties (e.g., creep resistance, the balance of rigidity and toughness). To achieve the above objects, the first aspect of the present invention provides a catalyst component for olefin polymerization, the catalyst component comprises elemental magnesium, elemental titanium, and an internal electron donor; the internal electron donor comprises a phosphate ester, and an $\alpha$-cyanosuccinate and/or a substituted $\alpha$-cyanosuccinate, a molar ratio of the phosphate ester to the elemental magnesium is (0.0002-0.002):1.

In the second aspect, the present invention provides a method for preparing a catalyst component for olefin polymerization, the method comprises: mixing a magnesium-containing carrier, titanium halide, and an internal electron donor, wherein the internal electron donor comprises a phosphate ester, and an $\alpha$-cyanosuccinate and/or a substituted $\alpha$-cyanosuccinate, the phosphate ester, and the magnesium-containing carrier are used in amounts such that the molar ratio of the phosphate ester in the obtained catalyst component to the magnesium-containing carrier calculated in terms of elemental magnesium is (0.0002-0.002):1.

In the third aspect, the present invention provides a catalyst system for olefin polymerization, the catalyst system comprising:

(1) the aforementioned catalyst component and/or the catalyst component prepared with the aforementioned method;
(2) alkylaluminum; and

(3) optionally an external electron donor.

In the fourth aspect, the present invention provides a use of the aforementioned catalyst, and/or the catalyst component prepared with the aforementioned method, and/or the aforementioned catalyst system in the olefin polymerization.

The fifth aspect of the present invention provides an olefin polymerization method comprising the following steps: performing an olefin polymerization reaction in the presence of the aforementioned catalyst component, and/or the catalyst component prepared with the aforementioned method, and/or the aforementioned catalyst system.

Due to the aforementioned technical scheme, the invention produces the following favorable effects:

(1) The catalyst component in the invention adopts an internal electron donor obtained by compounding the phosphate ester with the α-cyanosuccinate and/or substituted α-cyanosuccinate, and controls the molar ratio of the phosphate ester and the elemental magnesium, thereby improving Mz+1 and Mz+1/Mn of polymer, increasing the content of macromolecular fraction in polymer, which is beneficial to forming more frenulums / intercrystalline bridging chains in the polymer, and endowing the product with desirable properties (e.g., creep resistance, the balance of rigidity and toughness).

(2) Further preferably, the invention introduces an internal electron donor bis-alkoxy substituted alkane based on an internal electron donor obtained by compounding the phosphate ester with the α-cyanosuccinate and/or substituted α-cyanosuccinate, the invention can further improve the polymerization activity under the premise of ensuring the parameters Mz+1 and Mz+1/Mn.

## DESCRIPTION OF THE PREFERRED EMBODIMENT

The terminals and any value of the ranges disclosed herein are not limited to the precise ranges or values, such ranges or values shall be comprehended as comprising the values adjacent to the ranges or values. As for numerical ranges, the endpoint values of the various ranges, the endpoint values and the individual point values of the various ranges, and the individual point values may be combined with one another to produce one or more new numerical ranges, which should be deemed to have been specifically disclosed herein.

The first aspect of the invention provides a catalyst component for olefin polymerization, the catalyst component comprises elemental magnesium, elemental titanium, and an internal electron donor; the internal electron donor comprises a phosphate ester, and an α-cyanosuccinate and/or a substituted α-cyanosuccinate, a molar ratio of the phosphate ester to the elemental magnesium is (0.0002-0.002):1.

The molar ratio of the phosphate ester to the elemental magnesium may be 0.0002:1, 0.0003:1, 0.0004:1, 0.0006:1, 0.0008:1, 0.001:1, 0.0012:1, 0.0014:1, 0.0016:1, 0.0018:1, 0.002:1, and a random value within the range consisting of any two point values thereof. Preferably, the molar ratio of the phosphate ester to the elemental magnesium is (0.0003-0.002): 1.

The inventors of the present invention have unexpectedly found that the balance of rigidity and toughness of a polymer can be improved and the Mz+1 and Mz+1/Mn of the polymer can be increased by using an internal electron donor obtained by compounding a small amount of phosphate ester with an α-cyanosuccinate and/or a substituted α-cyanosuccinate. When the content of phosphate ester is higher than the aforementioned range, the morphology of a large portion of catalyst particles is damaged, when the catalyst is used in the polymerization reaction, the prepared polymer has low Mz+1 and Mz+1/Mn. Unless otherwise specified in the invention, the unit of Mz+1 and Mn is g/mol.

According to the invention, a molar ratio of the phosphate ester to the α-cyanosuccinate and/or substituted α-cyanosuccinate is preferably 1:(15-500) (for example, 1:15, 1:20, 1:30, 1:40, 1:50, 1:60, 1:70, 1:80, 1:90, 1:100, 1:200, 1:300, 1:400, 1:500, and a random value within the range consisting of any two point values thereof), more preferably 1:(40-400).

According to the present invention, preferably, the phosphate ester comprises at least one selected from the group consisting of a hydrocarbyl ester of phosphoric acid, a halogenated hydrocarbyl ester of phosphoric acid, a hydrocarbyl ester of phosphorous acid, and a halogenated hydrocarbyl ester of phosphorous acid; the number of carbon atoms of the hydrocarbon group in the phosphate ester may be $C_1$-$C_{10}$, preferably $C_1$-$C_5$. Preferably, the hydrocarbyl ester of phosphoric acid comprises at least one of monohydrocarbyl phosphate, dihydrocarbyl phosphate, and trihydrocarbyl phosphate, more preferably a tri-$C_1$-$C_{10}$ alkyl phosphate; further preferably a tri-$C_1$-$C_5$ alkyl phosphate.

According to a preferred embodiment of the invention, the tri-$C_1$-$C_{10}$ alkyl phosphate comprises at least one selected from the group consisting of tributyl phosphate, trimethyl phosphate, triethyl phosphate, and tripropyl phosphate.

According to the invention, the substituent group in the substituted α-cyanosuccinate may be located in α-position or β-position, preferably, the α-cyanosuccinate and/or substituted α-cyanosuccinate is at least one selected from the compounds represented by formula (III):

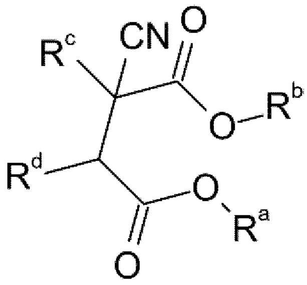

formula (III);

in the formula (III), $R^a$ and $R^b$ are each independently selected from $C_1$-$C_{14}$ straight chain alkyl, $C_3$-$C_{14}$ branched chain alkyl, $C_3$-$C_{10}$ cycloalkyl, $C_6$-$C_{10}$ aryl, $C_7$-$C_{10}$ alkaryl, or $C_7$-$C_{10}$ aralkyl; $R^c$ and $R^d$ are each independently selected from H, $C_1$-$C_{14}$ straight chain alkyl, $C_3$-$C_{14}$ branched chain alkyl, $C_3$-$C_{10}$ cycloalkyl, $C_6$-$C_{10}$ aryl, $C_7$-$C_{10}$ alkaryl, or $C_7$-$C_{10}$ aralkyl; $R^c$ and $R^d$ are optionally bonded to each other to synthesize one or more condensed ring structures.

According to the invention, preferably in formula (III), $R^a$ and $R^b$ are each independently selected from $C_1$-$C_{10}$ straight chain alkyl, $C_3$-$C_{10}$ branched chain alkyl, $C_3$-$C_{10}$ cycloalkyl, $C_6$-$C_{10}$ aryl, $C_7$-$C_{10}$ alkaryl, or $C_7$-$C_{10}$ aralkyl; $R^c$ and $R^d$ are each independently selected from $C_1$-$C_{10}$ straight chain alkyl, $C_3$-$C_{10}$ branched chain alkyl, $C_3$-$C_{10}$ cycloalkyl, $C_6$-$C_{20}$ aryl, $C_7$-$C_{20}$ alkaryl, or $C_7$-$C_{20}$ aromatic hydrocarbon.

According to the invention, preferably in formula (III), $R^a$ and $R^b$ are each independently selected from $C_1$-$C_5$ straight chain alkyl, $C_3$-$C_5$ branched chain alkyl, $C_3$-$C_5$ cycloalkyl; $R^c$ and $R^d$ are each independently selected from $C_1$-$C_5$ straight chain alkyl, $C_3$-$C_5$ branched chain alkyl, $C_3$-$C_6$ cycloalkyl, $C_6$-$C_8$ aryl.

Wherein the hydrogen atom on the aromatic ring (e.g. benzene ring) in the aryl, alkaryl, or aralkyl of the invention may be optionally substituted by another atom.

According to the invention, the $\alpha$-cyanosuccinate and/or substituted $\alpha$-cyanosuccinate preferably comprises at least one of 2,3-diisopropyl-2-cyano diethyl succinate, 3-methyl-2-isopropyl-2-cyano diethyl succinate, 3-ethyl-2-isopropyl-2-cyano diethyl succinate, 3-propyl-2-isopropyl-2-cyano diethyl succinate, 3-butyl-2-isopropyl-2-cyano diethyl succinate, 3-phenyl-2-isopropyl-2-cyano diethyl succinate, 2,3-dicyclohexyl-2-cyano diethyl succinate, 2,3-diisopropyl-2-cyano dibutyl succinate, and 2-diisopropyl-3-cyclopentyl-2-cyano diethyl succinate.

According to the present invention, the molar ratio of the $\alpha$-cyanosuccinate and/or substituted $\alpha$-cyanosuccinate to the elemental magnesium is preferably (0.01-0.2):1 (e.g., 0.01:1, 0.02:1, 0.03:1, 0.04:1, 0.05:1, 0.06:1, 0.07:1, 0.08:1, 0.09:1, 0.1:1, 0.11:1, 0.12:1, 0.15:1, 0.2:1, and a random value within the range consisting of any two point values thereof), more preferably (0.03-0.15):1, and further preferably (0.04-0.11):1.

According to the invention, the present inventors have further discovered when the product obtained from the compounding of phosphate ester and the $\alpha$-cyanosuccinate and/or substituted $\alpha$-cyanosuccinate with bis-alkoxy substituted alkane is used as an internal electron donor, it can not only improve Mz+1 and Mz+1/Mn of the polymer, but also further improve the polymerization activity, thus it is preferable that the internal electron donor further comprises a bis-alkoxy substituted alkane, more preferably, the bis-alkoxy substituted alkane is at least one selected from $(R^7)(R^8)C(OR^9)(OR^{10})$, wherein $R^7$ and $R^8$ are each independently selected from hydrogen, $C_1$-$C_{20}$ alkyl (straight chain alkyl or branched chain alkyl), $C_3$-$C_{20}$ cycloalkyl, $C_6$-$C_{20}$ aryl, $C_7$-$C_{20}$ aralkyl, or $C_7$-$C_{10}$ alkaryl, $R^7$ and $R^8$ are optionally bonded to form a ring; $R^9$ and $R^{10}$ are each independently selected from $C_1$-$C_{20}$ alkyl (straight chain alkyl or branched chain alkyl).

According to the invention, the bis-alkoxy substituted alkane is preferably at least one selected from $(R^7)(R^8)C(OR^9)(OR^{10})$, wherein $R^7$ and $R^8$ are each independently selected from hydrogen, $C_1$-$C_{10}$ alkyl, $C_3$-$C_{10}$ cycloalkyl, $C_6$-$C_{10}$ aryl, $C_7$-$C_{10}$ aralkyl, or $C_7$-$C_{10}$ alkaryl, $R^7$ and $R^8$ are optionally bonded to form a ring; $R^9$ and $R^{10}$ are each independently selected from $C_1$-$C_{10}$ alkyl (straight chain alkyl or branched chain alkyl).

In a still further preferred embodiment, the bis-alkoxy substituted alkane is at least one selected from the group consisting of 2-(2-ethylhexyl)-1,3-dimethoxy propane, 2-isopropyl-1,3-dimethoxy propane, 2-butyl-1,3-dimethoxy propane, 2-sec-butyl-1,3-dimethoxy propane, 2-cyclohexyl-1,3-dimethoxy propane, 2-phenyl-1,3-dimethoxy propane, 2-(2-phenylethyl)-1,3-dimethoxy propane, 2-(2-cyclohexylethyl)-1,3-dimethoxy propane, 2-(p-chlorophenyl)-1,3-dimethoxy propane, 2-(diphenylmethyl)-1,3-dimethoxy propane, 2,2-dicyclohexyl-1,3-dimethoxy propane, 2,2-dicyclopentyl-1,3-dimethoxy propane, 2,2-diethyl-1,3-dimethoxy propane, 2,2-dipropyl-1,3-dimethoxy propane, 2-diisopropyl-1,3-dimethoxy propane, 2,2-dibutyl-1, 3-dimethoxy propane, 2-methyl-2-propyl-1,3-dimethoxy propane, 2-methyl-2-benzyl-1,3-dimethoxypropane, 2-methyl-2-ethyl-1,3-dimethoxy propane, 2-methyl-2-isopropyl-1,3-dimethoxy propane, 2-methyl-2-phenyl-1,3-dimethoxy propane, 2-methyl-2-cyclohexyl-1,3-dimethoxy propane, 2,2-bis(2-cyclohexylethyl)-1,3-dimethoxy propane, 2-methyl-2-isobutyl-1,3-dimethoxy propane, 2-methyl-2-(2-ethylhexyl)-1,3-dimethoxy propane, 2,2-diisobutyl-1,3-dimethoxy propane, 2,2-diphenyl-1,3-dimethoxy propane, 2,2-dibenzyl-1,3-dimethoxy propane, 2,2-bis(cyclohexylmethyl)-1,3-dimethoxy propane, 2-isobutyl-2-isopropyl-1,3-dimethoxy propane, 2-(1-methylbutyl)-2-isopropyl-1,3-dimethoxy propane, 2-isopropyl-2-isopentyl-1,3-dimethoxy propane, 2-phenyl-2-isopropyl-1,3-dimethoxy

propane, 2-phenyl-2-sec-butyl-1,3-dimethoxy propane, 2-benzyl-2-isopropyl-1,3-dimethoxy propane, 2-cyclopentyl-2-isopropyl-1,3-dimethoxy propane, 2-cyclopentyl-2-sec-butyl-1,3-dimethoxy propane, 2-cyclohexyl-2-isopropyl-1,3-dimethoxy propane, 2-cyclohexyl-2-sec-butyl-1,3-dimethoxy propane, 2-isopropyl-2-sec-butyl-1,3-dimethoxy propane, 2-cyclohexyl-2-cyclohexylmethyl-1,3-dimethoxy propane, and 9,9-dimethoxy methyl fluorine, for example, selected from 2-isopropyl-2-isopentyl-1,3-dimethoxy propane and/or 9,9-dimethoxy methyl fluorine.

According to the invention, the content of the bis-alkoxy substituted alkane may be partially replaced α-cyanosuccinate and/or substituted α-cyanosuccinate, or may be additionally supplemented with a certain amount of bis-alkoxy substituted alkane based on the content of the α-cyanosuccinate and/or substituted α-cyanosuccinate, preferably, the molar ratio of the bis-alkoxy substituted alkane to the elemental magnesium is (0.001-0.15):1 (for example, 0.001:1, 0.005:1, 0.01:1, 0.02:1, 0.03:1, 0.04:1, 0.05:1, 0.06:1, 0.07:1, 0.08:1, 0.09:1, 0.1:1, 0.15:1, and a random value within the range consisting of any two point values thereof), more preferably (0.01-0.1):1, further preferably (0.02-0.1): 1.

According to the present invention, the molar ratio of the phosphate ester to the bis-alkoxy substituted alkane is preferably 1:(10-400) (for example 1:30, 1:40, 1:50, 1:60, 1:70, 1:80, 1:90, 1:100, 1:200, 1:300, 1:400, and a random value within the range consisting of any two point values thereof), more preferably 1:(50-350), and further preferably 1:(50-120).

According to a particularly preferred embodiment of the invention, when the phosphate ester, the α-cyanosuccinate and/or substituted α-cyanosuccinate, and the bis-alkoxy substituted alkane is used as the internal electron donor, the molar ratio of the phosphate ester, the α-cyanosuccinate and/or substituted α-cyanosuccinate, and the bis-alkoxy substituted alkane is 1:(10-250):(20-100), more preferably 1:(200-250): (50-100).

According to the present invention, the source of elemental magnesium is preferably a magnesium-containing carrier comprising a magnesium chloride alcoholate carrier and/or a magnesium alkoxylate carrier. More preferably, the carrier is spherical.

According to the invention, the magnesium chloride alcoholate carrier preferably comprises a component represented by formula (I),

$$MgY^1Y^2 \cdot mR'OH \qquad \text{formula (I)}$$

In formula (I), $Y^1$ is selected from halogen, preferably from chlorine or bromine; $Y^2$ is selected from halogen, alkyl, or alkoxy, more preferably selected from one of chlorine, bromine, $C_1$-$C_{14}$ alkyl, $C_1$-$C_{14}$ alkoxy, $C_6$-$C_{14}$ aryl, and $C_6$-$C_{14}$ aryloxy; R' is selected from one of halogen substituted or unsubstituted alkyl, halogen substituted or unsubstituted cycloalkyl, halogen substituted or unsubstituted aralkyl, more preferably selected from one of halogen substituted or unsubstituted $C_1$-$C_{12}$ alkyl, halogen substituted or unsubstituted $C_3$-$C_{10}$ cycloalkyl, halogen substituted or unsubstituted $C_7$-$C_{10}$ aralkyl; m is within the range of 1-5 (e.g., 1, 1.5, 2, 2.5, 3, 3.5, 4, 4.5, 5, and a random value within the range consisting of any two point values thereof).

In a further preferred embodiment, in formula (I), $Y^1$ is chlorine, $Y^2$ is chlorine, bromine, $C_1$-$C_5$ alkyl, $C_1$-$C_5$ alkoxy, $C_6$-$C_{10}$ aryl, or $C_6$-$C_{10}$ aryloxy, R' is selected from one of halogen substituted or unsubstituted $C_1$-$C_8$ alkyl, halogen substituted or unsubstituted $C_3$-$C_8$ cycloalkyl, preferably selected from one of halogen substituted or unsubstituted $C_1$-$C_6$ alkyl (for example, one of methyl, ethyl, n-propyl, isopropyl, n-butyl, isobutyl, or n-hexyl), and m is within the range of 1.2-3.5 (for example, within the range of 1.5-2.8).

More preferably, $MgY^1Y^2$ in formula (I) is magnesium dichloride.

In the invention, the preparation of the magnesium chloride alcoholate carrier is not particularly limited, the preparation can be carried out by any method disclosed in the prior art.

According to the invention, the magnesium chloride alcoholate carrier preferably does not contain a detectable amount of phosphorus (P), more preferably does not contain a detectable amount of phosphate ester.

According to the invention, the magnesium alkoxylate carrier preferably comprises a component represented by formula (II):

$$[R_1O]_{m'}Mg[OCH(CHXR_2)(R_3)]_n \qquad \text{formula (II);}$$

in the formula (II), $R_1$ is selected from one of straight chain alkyl or halogen substituted straight chain alkyl, branched chain alkyl or halogen substituted branched chain alkyl, cycloalkyl or halogen substituted cycloalkyl; $R_2$ and $R_3$ are each independently one of hydrogen, straight chain alkyl or halogen substituted straight chain alkyl, branched chain alkyl or halogen substituted branched chain alkyl; X is halogen; m' is within the range of 0.1-1.9, n is within the range of 0.1-1.9, m' + n = 2.

In a further preferred embodiment, in formula (II), $R_1$ is selected from one of $C_1$-$C_8$ straight chain alkyl or halogen substituted straight chain alkyl, $C_3$-$C_8$ branched chain alkyl or halogen substituted branched chain alkyl, $C_3$-$C_8$ cycloalkyl or halogen substituted cycloalkyl; $R_2$ and $R_3$ are each independently one of hydrogen, $C_1$-$C_5$ straight chain alkyl or halogen substituted straight chain alkyl, $C_3$-$C_5$ branched chain alkyl or halogen substituted branched chain alkyl; x is chlorine or bromine; m' is within the range of 0.8-1.2, n is within the range of 0.8-1.2, m' + n = 2.

According to the invention, the magnesium alkoxylate carrier preferably does not contain a detectable amount of P, more preferably does not contain a detectable amount of phosphate ester.

In a preferred embodiment, the magnesium alkoxylate carrier is a mixture or reaction product of components including magnesium halide, an organic alcohol, and an epoxy compound.

In a further preferred embodiment, the magnesium halide is at least one selected from the compounds represented by $MgX_2$, the organic alcohol is at least one selected from the compounds represented by $R_1OH$, and the epoxy compound is at least one selected from the compounds represented by formula (II').

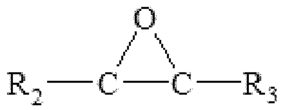

Formula (II')

Wherein the group X in $MgX_2$, the group $R_1$ in $R_1OH$, the groups $R_2$ and $R_3$ in formula (II') have the same definitions as the corresponding groups in formula (II), the contents will not be repeatedly described herein.

The preparation of the magnesium alkoxylate carrier represented by formula (II) of the present invention is not particularly limited, the preparation may be carried out with any method disclosed in the prior art.

According to the invention, preferably, the source of elemental titanium is titanium halide, which is at least one selected from the compounds represented by $Ti(OR^4)_{4-n}X'_n$, wherein $R^4$ is selected from $C_1$-$C_{20}$ hydrocarbyl, preferably selected from $C_1$-$C_{14}$ aliphatic group, repeated X' is the same or different, and each is independently selected from F, Cl, or Br, and n is an integer of 0-4.

According to the present invention, the titanium halide is preferably selected from one of titanium tetrachloride, titanium tetrabromide, titanium tetraiodide, tetrabutoxytitanium, tetraethoxytitanium, titanium monochlorotributoxide, titanium dichlorodibutoxide, titanium trichlorobutoxide, titanium monochlorotriethoxide, titanium dichlorodiethoxide, titanium trichloromonoethoxide, titanium trichloride, or a mixture thereof, more preferably titanium tetrachloride.

According to the present invention, the molar ratio of the elemental titanium to the elemental magnesium is (0.01-0.3):1 (e.g., 0.01:1, 0.02:1, 0.03:1, 0.04:1, 0.05:1, 0.06:1, 0.07:1, 0.08:1, 0.09:1, 0.1:1, 0.11:1, 0.12:1, 0.15:1, 0.2:1, 0.24:1, 0.28:1, 0.3:1, and a random value within the range consisting of any two point values thereof), more preferably (0.06-0.15): 1.

The bulk density of the polymer prepared with the olefin polymerization catalyst of the invention is also one of the important properties of the catalyst, generally speaking, the higher bulk density of the polymer means that the production equipment may have a higher load, thus it is capable of bringing higher production efficiency, saving costs and improving the economic efficiency. The present inventors discovered that the propylene polymer obtained by performing the olefin polymerization with the present invention catalyst has a higher bulk density.

In the second aspect, the present invention provides a method for preparing a catalyst component for olefin polymerization, the method comprises: mixing a magnesium-containing carrier, titanium halide, and an internal electron donor, wherein the internal electron donor comprises a phosphate ester, and an $\alpha$-cyanosuccinate and/or a substituted $\alpha$-cyanosuccinate, the phosphate ester, and the magnesium-containing carrier are used in amounts such that the molar ratio of the phosphate ester in the obtained catalyst component to the magnesium-containing carrier calculated in terms of elemental magnesium is (0.0002-0.002):1. While in the prior art, the phosphate ester is used as a solvent to dissolve magnesium halide, the dosage is large, the molar dosage of phosphate ester is about 1 time of the elemental magnesium, or even higher.

According to the invention, preferably, the process of mixing the magnesium-containing carrier, the titanium halide, and the internal electron donor comprises the following steps: (1) mixing the magnesium-containing carrier with the titanium halide; (2) blending the system of step (1) with the internal electron donor.

According to the invention, the mixing operation of step (1) is preferably carried out at a temperature from -30°C to 0°C, more preferably from -25°C to -15°C. For example, the mixing operation in step (1) may be implemented at a temperature of -30°C, -20°C, -10°C, 0°C or 5°C. The mixing method in step (1) is not particularly limited, for example, it may be stirring. The mixing time in step (1) may be within the range of 1-600min.

According to the invention, it is preferable to initially carry out a heating treatment in step (2), and add the internal electron donor in the heating process; more preferably, the temperature is raised to the range from 80°C to 130°C, preferably the range from 90°C to 120°C. For example, the temperature is raised to 80°C, 85°C, 90°C, 95°C, 100°C, 105°C, 110°C, 115°C, 120°C, or 130°C. The time for mixing in step (2) may be within the range of 30-900min.

According to the invention, it is preferred that the mixing operation in step (2) is followed by filtering and optionally washing and drying. The mode of mixing in step (2) is not particularly limited, for example, the mixing may be stirring. In a further preferred embodiment, the washing is initially performed with titanium halide and then performed with an alkane solvent (e.g. hexane).

According to one particularly preferred embodiment of the invention, the method comprises the following steps:

(1) Adding a titanium halide to the reaction vessel, cooling to a temperature from -30°C to 0°C, and then adding a magnesium-containing carrier to the reaction vessel, stirring at the temperature from -30°C to 0°C for 1-600min (preferably 10-60min);
(2) Heating the reactor vessel to a temperature of 0-130°C (preferably 80-130°C), and adding an internal electron donor during the heating process, maintaining the temperature for 30-900min (preferably 10-60min), subsequently filtering the liquid. Adding titanium tetrachloride for washing, finally washing with hexane, and drying to prepare the catalyst component.

According to the present invention, the α-cyanosuccinate and/or substituted α-cyanosuccinate and the magnesium-containing carrier are used in amounts such that the molar ratio of the α-cyanosuccinate and/or substituted α-cyanosuccinate in the obtained catalyst component to the magnesium-containing carrier calculated in terms of elemental magnesium is preferably (0.01-0.2):1, more preferably (0.03-0.15):1, further preferably (0.04-0.11):1.
According to the invention, the phosphate ester and the α-cyanosuccinate and/or substituted α-cyanosuccinate are used in amounts such that the molar ratio of the phosphate ester in the obtained catalyst component to the α-cyanosuccinate and/or substituted α-cyanosuccinate is preferably 1:(15-500), more preferably 1: (40-300).
According to the present invention, the internal electron donor preferably further comprises a bis-alkoxy substituted alkane.
According to the invention, the content of the bis-alkoxy substituted alkane may be partially replaced α-cyanosuccinate and/or substituted α-cyanosuccinate, or may be additionally supplemented with a certain amount of bis-alkoxy substituted alkane based on the content of the α-cyanosuccinate and/or substituted α-cyanosuccinate, the bis-alkoxy substituted alkane and the magnesium-containing carrier are used in amounts such that the molar ratio of the bis-alkoxy substituted alkane in the obtained catalyst component to the magnesium-containing carrier calculated in terms of elemental magnesium is preferably (0.001-0.15):1, more preferably (0.01-0.1):1, further preferably (0.02-0.1):1.
According to the invention, the phosphate ester and the bis-alkoxy substituted alkane are used in amounts such that the molar ratio of the phosphate ester in the obtained catalyst component to the bis-alkoxy substituted alkane is preferably 1:(10-400), more preferably 1:(50-350).
According to a particularly preferred embodiment of the invention, when the phosphate ester, the α-cyanosuccinate and/or substituted α-cyanosuccinate, and the bis-alkoxy substituted alkane is used as the internal electron donor, the phosphate ester, the α-cyanosuccinate and/or substituted α-cyanosuccinate, and the bis-alkoxy substituted alkane are used in amounts such that the molar ratio of the phosphate ester, the α-cyanosuccinate and/or substituted α-cyanosuccinate, and the bis-alkoxy substituted alkane in the obtained catalyst component is 1:(10-250):(20-100), more preferably 1:(200-250):(50-100).
According to the invention, the titanium halide and the magnesium-containing carrier are used in amounts such that the molar ratio of the titanium halide in the obtained catalyst component to the magnesium-containing carrier calculated in terms of elemental magnesium is preferably (0.01-0.3):1, more preferably (0.06-0.15): 1.
In the invention, the magnesium-containing carrier and the titanium halide are as described in the first aspect, the contents will not be repeatedly described herein.
In a preferred embodiment, the magnesium chloride alcoholate carrier may be prepared with the conventional method in the art (e.g., CN1718595A); preferably, the magnesium chloride alcoholate carrier is prepared with the method including but not limited to the following process:

1) Mixing $MgY^1Y^2$ with R'OH and carrying out the reaction at 110-130°C for 1-3h to obtain a $MgY^1Y^2$/R'OH adduct molten mass;
2) Emulsifying the $MgY^1Y^2$/R'OH adduct molten mass, and quenching the emulsified product to form a shape, then drying the product to obtain the $MgY^1Y^2 \cdot m'R'OH$; wherein an inert liquid medium is added in step 1) and/or step 2).

Wherein the molar ratio of R'OH to $MgY^1Y^2$ is within the range of 1-5, preferably within the range of 1.2-3.5 (e.g. 1.5-2.8).
In step 2), the inert liquid medium may be a variety of liquid media commonly used in the art that do not chemically interact with the magnesium halide adduct, such as a silicone oil and/or a hydrocarbon-based solvent. Specifically, the inert liquid media may be one or two selected from the group consisting of kerosene, paraffinic oil, petrolatum, white oil, methyl silicone oil, ethyl silicone oil, methyl ethyl silicone oil, phenyl silicone oil, and methyl phenyl silicone oil. The used amount of the inert liquid medium may be selected according to the specific dosage of $MgY^1Y^2$. Generally, the used amount of the inert liquid medium is 0.2-13L, preferably 0.6-6.5L, such as 0.2L, 0.5L, 1L, 2L, 4L, 6L, 8L, 10L, 12L, or 13L, relative to per mole of magnesium in $MgY^1Y^2$.
In a preferred embodiment, said inert liquid medium is added in step 1) and/or in step 2).

For example in mode (A), said inert liquid medium is only added in step 2), that is, mixing the $MgY^1Y^2$/R'OH adduct molten mass with the inert liquid medium, emulsifying the obtained mixture, thereby performing emulsification of the $MgY^1Y^2$/R'OH adduct molten mass.

For example in mode (B), said inert liquid medium is added in both step 1) and step 2), that is, the inert liquid medium is added in step 1) as the reaction medium for preparing the $MgY^1Y^2$/R'OH adduct molten mass, thereby obtaining a mixed liquor containing the $MgY^1Y^2$/R'OH adduct molten mass, the mixed liquor is then mixed with the inert liquid medium and emulsified, thereby performing emulsification of the $MgY^1Y^2$/R'OH adduct molten mass. The inert liquid medium in step 1) and the inert liquid medium in step 2) may be the same or different, for instance, the inert liquid medium in step 1) may be white oil, and the inert liquid medium in step 2) may be methyl silicone oil. When mixing in step 2) is performed, it is necessary to preheat the inert liquid medium to the same temperature as the $MgY^1Y^2$/R'OH adduct molten mass.

For example in mode (C), the inert liquid medium is added in step 1) as the reaction medium for preparing the $MgY^1Y^2$/R'OH adduct molten mass, thereby obtaining a mixed liquor containing the $MgY^1Y^2$/R'OH adduct molten mass, the mixed liquor is then emulsified, thereby performing emulsification of the $MgY^1Y^2$/R'OH adduct molten mass.

According to the invention, a surfactant (e.g., fatty acid glyceride, fatty acid sorbitan, polysorbate, polyoxyethylene ether, or polyoxyethylene-polyoxypropylene copolymer) may also be added to the inert liquid medium as required. The used amount of the surfactant may be a conventional dosage in the art, for example, the surfactant is used in an amount of 0.001-1mol, such as 0.001mol, 0.005mol, 0.01mol, 0.05mol, 0.1mol, 0.2mol, 0.4mol, 0.6mol, 0.8mol, or 1mol, relative to per mol of magnesium in $MgY^1Y^2$.

Various methods well-known among those skilled in the art may be used in the invention to emulsify the $MgY^1Y^2$/R'OH adduct molten mass, for example, emulsification may be achieved by subjecting the $MgY^1Y^2$/R'OH adduct molten mass to high-speed shearing in the presence of an inert liquid medium. Such methods of high-speed shearing are well-known among those skilled in the art, for example, emulsification is carried out according to the methods disclosed in the following patent literature: CN1151183C discloses a high-speed stirring method (i.e., stirring the $MgY^1Y^2$/R'OH adduct molten mass in an inert liquid medium at a rotational speed of 2,000-5,000 rpm); CN1267508C discloses that a mixture of the $MgY^1Y^2$/R'OH adduct molten mass and the inert liquid medium is dispersed by rotating in a hyper-gravity bed (the rotation speed may be 100-3,000 rpm); CN1463990A discloses that a mixture of the $MgY^1Y^2$/R'OH adduct molten mass, a silicone oil, and white oil is output in an emulsifying machine at a rotation speed of 1,500-8,000 rpm; US6020279 discloses a solution of emulsifying a mixture containing the $MgY^1Y^2$/R'OH adduct molten mass through a spraying method.

According to the invention, the emulsified product may be quenched and molded by using the methods well-known among those skilled in the art, thereby obtaining a spherical $MgY^1Y^2 \cdot m'R'OH$. For example, the emulsified product may be quenched and molded by means of transferring it into a liquid cooling medium.

The liquid cooling medium may be a variety of liquid media commonly used in the art that do not chemically interact with the magnesium halide adduct. For example, the liquid cooling medium may be an inert hydrocarbon-based solvent. Specific examples of the liquid cooling medium may include but are not limited to, at least one of n-pentane, n-hexane, n-heptane, gasoline, and petroleum.

In the invention, the water in said liquid cooling medium may be involved in the reaction or subjected to a dehydration treatment, to control the water content of the liquid cooling medium in use to the extent that it does not affect the test results. Typically, the water content of the liquid cooling medium is controlled to be no more than 5 ppm by weight. The methods of controlling or reducing the water content of the liquid cooling medium are well known in the art, for example, the liquid material may be distilled and/or contacted with a water absorbing agent (e.g., a molecular sieve), and a high purity inert gas stream (e.g., a high purity nitrogen gas stream), may be continuously introduced into the heated liquid material.

The temperature of the liquid cooling medium can be determined as long as it enables to cool and mold the emulsified product. Generally, the temperature of the liquid cooling medium may be from -50°C to 0°C, preferably from -40°C to -20°C. The used amount of said liquid cooling medium is not particularly limited as long as the liquid cooling medium is sufficient to cool and mold the emulsified product. Specifically, the volume ratio of the liquid cooling medium to the emulsified product is (1-15):1, preferably (2-9):1.

The $MgY^1Y^2 \cdot m'R'OH$ particles obtained by quenching and molding may be subjected to washing and drying. The obtained $MgY^1Y^2 \cdot m'R'OH$ particles may be washed with the inert hydrocarbon-based solvents (e.g., n-pentane, n-hexane, n-heptane, petroleum ether, and gasoline) generally known among those skilled in the art. The drying temperature may be not higher than 35°C, preferably 25-30°C; and the drying time may be 0.5-3 hours, preferably 1-2 hours. The drying may be carried out at atmospheric pressure or reduced pressure.

Other parameters not defined in the preparation method of the invention can be routinely selected according to the prior art.

In a preferred embodiment, the magnesium alkoxylate carrier may be prepared with the conventional methods in the art; preferably, the magnesium alkoxylate carrier is prepared with the method including but not limited to the following steps:

S1: Mixing and heating a magnesium halide represented by the general formula $MgX_2$, a compound represented by the general formula $R_5OH$, a surfactant, and an optional inert liquid medium to obtain a liquid mixture;
S2: Contacting the liquid mixture obtained in step S1 with an epoxy compound to carry out the reaction.

In a preferred embodiment, the inert liquid medium in step S1 is at least one selected from the group consisting of kerosene, paraffinic oil, petrolatum, white oil, methyl silicone oil, ethyl silicone oil, methyl ethyl silicone oil, phenyl silicone oil, and methyl phenyl silicone oil; preferably white oil.

In a further preferred embodiment, said inert liquid medium is used in an amount of 0.8-10L, preferably 2-8L, based on 1mol of a magnesium halide represented by the general formula $MgX_2$.

In a preferred embodiment, the surfactant is at least one selected from the group consisting of polyvinylpyrrolidone (PVP), polyethylene glycol (PEG), polyvinyl alcohol, polyacrylic acid, polyacrylate, polyacrylamide, polystyrene sulfonate, naphthalene sulfonate formaldehyde condensate, condensed alkyl phenyl ether sulfate, condensed alkyl phenol polyoxyethylene ether phosphate ester, oxy alkyl acrylate copolymer modified polyethyleneimine, polymer of 1-dodeca-4-ethylene pyridine bromide, polyvinylbenzyl trimethylamine salt, polyethylene oxide propylene epoxide block copolymer, polyvinylpyrrolidone vinyl acetate copolymer, alkyl phenyl polyoxyethylene ether, and polyalkyl methacrylate; preferably at least one of polyvinylpyrrolidone, polyvinylpyrrolidone vinyl acetate copolymer, and polyethylene glycol.

In a further preferred embodiment, the surfactant is used in an amount of 1-20g, for example, 1g, 2g, 4g, 6g, 8g, 10g, 12g, 14g, 16g, 18g, or 20g, based on 1mol of $MgX_2$.

In a preferred embodiment, the heating temperature in step S1 is within the range of 80°C and 120°C, and the reaction time is within the range of 0.5-5 hours; preferably, the heating temperature is within the range of 80°C and 100°C, and the reaction time is within the range of 0.5-3 hours.

In a preferred embodiment, in step S2, the contact reaction temperature is within the range of 40-120°C, and the reaction time is 15-60 minutes; preferably, the contact reaction temperature is within the range of 60-100°C, and the reaction time is 20-50 minutes.

In a preferred embodiment, the preparation method of the magnesium alkoxylate carrier further optionally comprises a step S3: performing a solid-liquid separation, washing and drying the solid product obtained from the separation.

The solid-liquid separation can be performed with any of the methods in the prior art that can accomplish the separation of the solid phase from the liquid phase, such as suction filtration, pressure filtration, or centrifugation, and preferably the solid-liquid separation method is a pressure filtration method. The conditions of pressure filtration are not particularly limited in the invention so the separation of the solid phase from the liquid phase can be accomplished as sufficiently as possible. Washing the solid product can be performed with the methods well-known among those skilled in the art, for example, washing the obtained solid product can be performed by using an inert hydrocarbon solvent (e.g., pentane, hexane, heptane, petroleum ether, and gasoline). The drying conditions are not particularly limited in the invention, for example, the drying temperature may be within the range of 20-70°C, and the drying time may be 0.5-10 hours. According to the invention, the drying can be performed under atmospheric pressure or reduced pressure conditions.

As specific embodiments of the invention, the amount of each ingredient in the spherical carrier of the olefin polymerization catalyst can be selected and adjusted within a wide range. Preferably, the used amount of the compound represented by the general formula $R_5OH$ is 4-30mol, and the used amount of the epoxy compound is 1-10mol, based on 1mol of a magnesium halide represented by the general formula $MgX_2$. Further preferably, the used amount of the compound represented by the general formula $R_5OH$ is 6-20mol, and the used amount of the epoxy compound is 2-6mol, based on 1mol of a magnesium halide represented by the general formula $MgX_2$.

In a preferred embodiment, the compound represented by the general formula $R_5OH$ may be $C_1$-$C_5$ monohydric alcohol, for example, it may be at least one of methanol, ethanol, propanol, butanol, and pentanol, particularly preferred ethanol.

The third aspect of the invention provides a catalyst system for olefin polymerization, the catalyst system comprising:

(1) the aforementioned catalyst component and/or the catalyst component prepared with the aforementioned method;
(2) alkylaluminum; and
(3) optionally an external electron donor.

According to the invention, the alkylaluminum may be an alkylaluminum with activation commonly used in the art, preferably, the alkylaluminum contains 1-3 alkyl groups, the alkyl is $C_1$-$C_8$ alkyl, more preferably, the alkylaluminum is at least one selected from the group consisting of triethyl aluminum, tripropyl aluminum, tri-n-butyl aluminum, triisobutyl aluminum, tri-n-octyl aluminum, monohydrodiethyl aluminum, monohydrodiisobutyl aluminum, monochlorodiethyl aluminum, monochlorodiisobutyl aluminum, sesquiethyl aluminum chloride, and dichloroethyl aluminum.

According to the invention, the external electron donor may be a commonly used external electron donor in the art, preferably the external electron donor is at least one selected from silicon-containing compounds, in particular at least one selected from $C_4$-$C_{20}$ silane, particularly the silane containing two alkoxy groups (e.g., $C_1$-$C_5$ alkoxy groups), more preferably at least one selected from the group consisting of cyclohexyl methyl dimethoxy silane, diisopropyl dimethoxy silane, di-n-butyl dimethoxy silane, diisobutyl dimethoxy silane, diphenyl dimethoxy silane, methyl-t-butyl dimethoxy silane, dicyclopentyl dimethoxy silane, 2-ethyl piperidinyl-2-t-butyl dimethoxysilane, (1,1,1-trifluoro-2-propyl)-2-ethylpiperidinyl dimethoxy silane, (1,1,1-trifluoro-2-propyl) -methyl dimethoxy silane.

According to the present invention, a molar ratio of the catalyst component to the alkylaluminum is preferably 1:(15-718) (for example 1:15, 1:50, 1:100, 1:150, 1:200, 1:250, 1:300, 1:350, 1:400, 1:450, 1:500, 1:550, 1:600, 1:650, 1:700 or 1:718, and a random value within the range consisting of any two point values thereof), wherein the mole number of the catalyst component is calculated in terms of the mole number of the elemental Ti contained herein.

According to the invention, a molar ratio of the catalyst component to the external electron donor is preferably 1:(1-111) (for example, 1:1, 1:5, 1:6, 1:7, 1:10, 1:20, 1:30, 1:40, 1:50, 1:60, 1:70, 1:80, 1:90, 1:100, or 1:110, and a random value within the range consisting of any two point values thereof), wherein the mole number of the catalyst component is calculated in terms of the mole number of the elemental Ti contained herein.

The fourth aspect of the invention provides a use of the aforementioned catalyst component, and/or the catalyst component prepared with the aforementioned method, and/or the aforementioned catalyst system in the olefin polymerization.

The fifth aspect of the invention provides an olefin polymerization method comprising the following steps: performing an olefin polymerization reaction in the presence of the aforementioned catalyst component, and/or the catalyst component prepared with the aforementioned method, and/or the aforementioned catalyst system.

According to the invention, the olefin is preferably selected from at least one compound represented by the formula $CH_2$=CHR, wherein R is hydrogen, or $C_1$-$C_6$ straight chain alkyl, or $C_3$-$C_6$ branched chain alkyl.

In a further preferred embodiment, the olefin is at least one selected from the group consisting of ethylene, propylene, 1-n-butene, 1-n-pentene, 1-n-hexene, 1-n-octene, 4-methyl-1-pentene, preferably at least one selected from the group consisting of ethylene, propylene, 1-n-butene, 1-n-hexene, 4-methyl-1-pentene, for example propylene.

Wherein the polymerization is a homo-polymerization of a single olefin or a copolymerization of two or more olefins.

According to the invention, the polymerization temperature is preferably within the range of 0-150°C, for example, the temperature is 0°C, 20°C, 50°C, 80°C, 100°C, 120°C, or 150°C.

According to the invention, the polymerization time is preferably within the range of 0.1-8 hours, for example, the time is 0.1h, 0.5h, 1h, 2h, 3h, 4h, 5h, 6h, 7h, or 8h.

According to the invention, the polymerization pressure is preferably within the range of 0.01-10MPa. For example, the pressure is 0.01MPa, 0.05MPa, 0.1MPa, 0.5MPa, 1MPa, 2MPa, 4MPa, 6MPa, 8MPa, or 10MPa. The polymerization pressure in the invention refers to the gauge pressure.

In a further preferred embodiment, the polymerization conditions comprise a temperature of 50-100°C and a time of 0.5-3 hours.

In a further preferred embodiment, the polymerization conditions comprise a pressure within the range of 0.5-5MPa.

The used amount of a catalyst may be various conventional dosages of the olefin catalyst in the prior art.

In the invention, the polymerization process may further comprise a step of using hydrogen gas. The hydrogen gas may be used in an amount of 0-15L (standard volume) or 0.5-10L (standard volume) relative to 1L of liquid propylene.

The invention will be described in detail below with reference to examples.

Unless otherwise specified, each of the raw materials used in the Examples and Comparative Examples was disclosed in the prior art, for instance, the raw materials may be directly obtained by purchase or produced according to the preparation method disclosed by the prior art.

In the Examples and Comparative Examples of the invention, the average particle diameter and particle size distribution of the olefin polymerization catalyst carrier were measured by using the Master Sizer 2000 laser particle analyzer (manufactured by Malvern Instruments Ltd.).

In the Examples and Comparative Examples of the invention, the content of each component in the catalyst was tested with the following method:

According to the solid catalyst component provided by the invention, the titanium content can be measured according to a colorimetric method. Specifically, 0.2-0.5g of a sample was weighed, the sample was dissolved with 50mL of 2N $H_2SO_4$, the upper layer of drift was filtered, a clear liquid was extracted and waited for the color comparison; 2N $H_2SO_4$ solution was used as a blank, the absorbance E1 of the blank was measured by using a cuvette having a thickness of 1cm at the wavelength of 410$\mu$m, 1 drop of 30% $H_2O_2$ was then dripped, shaken up, the absorbance E2 of the sample was measured, and the titanium content Ti (%) was calculated based on the following formula:

$$Ti\%=[(E2 - E1)\times100)/(K\cdot L\cdot W\cdot 100)]\times100$$

In the formula, W denoted the weight of a sample (g); L denoted the cuvette thickness (cm); K denoted the specific extinction coefficient; E1 denoted the blank absorbance; E2 denoted the sample absorbance.

The magnesium content may be determined through the Ethylene Diamine Tetraacetic Acid (EDTA) titration method. Specifically, 0.2-0.5g of a sample was placed in a 250mL Erlenmeyer flask, dissolved by adding 20-30mL of 2N $H_2SO_4$ solution, 20mL of triethanolamine (1 + 2) standard solution was added, NaOH solution having a concentration of 20% was used for adjusting pH =10, the Erlenmeyer flask was shaken, then added with 10mL of a buffer solution having pH =10, 6 drops of $H_2O_2$ with a concentration of 30% and 30-50mL of distilled water were further added, a small amount of chrome Black T indicator was added, the solution was shook to form a uniform solution, titrated with 0.02N EDTA solution to the end point that the solution color changed from purple-red to blue (disappearance of violet), the magnesium content Mg (%) was calculated according to the following formula:

$$Mg\ (\%)=[(VE\cdot NE\times24.31)/(G\cdot 1000)]\times100$$

In the formula, G denoted the sample mass (g); VE denoted the amount of consumed EDTA (mL); NE denoted the equivalent number of EDTA solution; 24.31 was the atomic weight of magnesium (Mg).

P-content analysis was performed by using an X-ray fluorescence spectrometer with a model Aios-Advanced manufactured by the PANalytical B. V. in the Netherlands.

Bulk density: Polymer powder was introduced into a 100mL container through a free fall in a funnel from a place with a height of 10cm, after the container was filled up, the mass of polymer powder in the container was weighed and denoted as X in the unit of gram (g), the calculation formula of polymer bulk density was X÷100, and the bulk density unit was g/$cm^3$.

The contents of the α-cyanosuccinate and/or substituted α-cyanosuccinate and the bis-alkoxy substituted alkane were measured by using gas chromatography with dipentyl phthalate as an internal standard.

In the Examples and Comparative Examples of the invention, the polymer (polypropylene) molecular weights Mw, Mn, and Mz+1 were determined by using a PL-GPC 220-type gel permeation chromatograph manufactured by Polymer Laboratories Ltd. in the United Kingdom in combination with an IR5 type infrared detector, at the temperature of 150°C, the chromatographic columns were three PLgel 13μm Olexis columns, the mobile phase was 1,2,4-trichlorobenzene (an antioxidant 2,6-dibutyl-p-cresol with a mass fraction of 0.025% was added), the flow rate was 1.0 mL/min, the sample mass concentration was about 1 mg/mL, and the universal calibration was performed using EasiCal PS-1 narrow distribution polystyrene standard sample manufactured by PL Corporation.

In Examples and Comparative Examples of the invention, the melt mass flow rate (MFR) of the polymer (polypropylene) was measured according to the standard ISO1133 at a temperature of 230°C under a load of 2.16 kg.

The isotactic index of the polymer (polypropylene) indicated the mass percent of the polymer which was insoluble in boiling n-heptane under specified conditions, the isotactic index was measured by using a heptane extraction method (boiling extraction by heptane for 6 hours), namely 2g of dried polymer sample was taken and placed in an extractor to be extracted by boiling heptane for 6 hours, the residue was then dried to a constant weight, the ratio of the mass (g) of the obtained polymer to 2 was the isotactic index.

In Examples and Comparative Examples of the invention, the apparent morphology of the olefin polymerization catalyst carrier was observed by a light microscope model number Eclipse E200 commercially available from Nikon Corporation.

Theα-cyanosuccinate and/or substituted α-cyanosuccinate in the examples were synthesized with the method disclosed in CN101811983A, CN102372651A, CN102603931A, WO2010/094211A1, etc.

The triethylaluminum in use was a hexane solution of triethylaluminum, wherein the concentration of triethylaluminum was 0.5mmol/mL.

A testing method for the angle of repose of a catalyst: the testing was implemented with a rotary table-type angle of repose tester, a certain amount of sample fell on a circular plate, and the angle (i.e., angle of repose) was measured by using a measuring rod in combination with the stacking angle.

Example A below served to illustrate a preparation method of a catalyst component by using the α-cyanosuccinate and/or substituted α-cyanosuccinate as an internal electron donor, and a process of preparing a polymer.

Example A1

(1) The magnesium chloride alcoholate carrier $MgY^1Y^2 \cdot mR'OH$ was prepared with the following method: 10kg of anhydrous magnesium chloride and 12.6kg of ethyl alcohol were added to 60L of white oil having a viscosity of 30 centipoise (20°C) in a 150L reactor equipped with a stirrer, the reaction was performed at 125°C for 2 hours. A mixed liquor of the resulting molten adduct and white oil was then transferred to a methyl silicone oil medium which had been preheated to 125°C; the viscosity of the methyl silicone oil was 300 centipoise (20°C), and the used amount of the methyl silicone oil was 120L; the materials were stirred at 200 rpm for 30 minutes to obtain a mixed solution. The mixed solution was introduced into a hyper-gravity rotary bed for dispersion, the dispersed mixed solution was introduced, under the stirring conditions, into a hexane medium which had been cooled to -35°C in advance, the dosage of hexane was 1,200L, and the melt of magnesium chloride/alcohol adduct dispersed as small droplets were cooled and solidified into spherical solid particles. Solid particulate matter was filtered out from the suspension obtained after the quenching process, the particulate matter was washed 5 times with hexane at room temperature, the hexane was used at an amount of 100L/time, the particulate matter was vacuumized at 60°C to obtain a solid.

The magnesium chloride alcoholate carrier had an average particle diameter (D50) of 52μm and a particle size distribution ((D90-D10)/D50) of 1.1. The morphology of the particles was observed by using an optical microscope that the magnesium chloride alcoholate carrier had a relatively uniform particle morphology, a roughly smooth surface, and a relatively concentrated particle size distribution.

Upon gas chromatography-mass spectrometry, nuclear magnetic resonance (NMR), and elemental analysis, the magnesium chloride alcoholate carrier was determined to contain a component represented by the following formula: $MgCl_2 \cdot 2.5C_2H_3OH$.

(2) Preparation of olefin polymerization catalyst component

100mL of titanium tetrachloride was added in a 300mL glass reactor bottle, cooled to -20°C, 0.04mol of magnesium chloride alcoholate carrier was added, and stirred at -20°C for 30min. Thereafter, the temperature was slowly raised to 110°C, 0.38mmol of tributyl phosphate and 6mmol of diethyl 2,3-diisopropyl-2-cyanosuccinate were added during the temperature rise process, the temperature was maintained at 110°C for 30min, the liquid was subsequently filtered off. Titanium tetrachloride was then added to wash the catalyst component twice, finally washed the catalyst component with hexane three times, and dried to obtain the catalyst a.

(3) Propylene polymerization reaction

The air in a 5L stainless steel autoclave was purged with a nitrogen gas stream, 1mmol of triethyl aluminum, 0.05mmol of methyl cyclohexyl dimethoxy silane, 10mL of anhydrous hexane, 10mg of the prepared catalyst a (containing 0.008mmol of titanium), 1.5L (standard volume) of hydrogen gas, and 2.5L of liquid propylene were subsequently introduced into the nitrogen gas stream. The temperature was increased to 70°C, the reaction was conducted at the temperature for 1 hour, the temperature was decreased, the pressure was released, and the reaction product was output and dried to prepare a polypropylene powder.

Example A2

The catalyst was prepared according to the method in Example A1, except that the dosage of phosphate ester was varied, and 0.76 mmol of tributyl phosphate was used.

Example A3

The catalyst was prepared according to the method in Example A1, except that the dosage of phosphate ester was varied, and 1.14 mmol of tributyl phosphate was used.

Example A4

The catalyst was prepared according to the method in Example A1, except that the dosage of phosphate ester was varied, and 1.9 mmol of tributyl phosphate was used.

Example A5

The catalyst was prepared according to the method in Example A1, except that the dosage of phosphate ester was varied, and 3.04 mmol of tributyl phosphate was used.

Example A6

(1) An alkoxy magnesium carrier was obtained with the following method: 0.08mol of magnesium chloride, 1.2mol of ethanol, 1g of surfactant PVP (polyvinylpyrrolidone) were added into a reaction kettle with a volume of 0.6L, the temperature was raised to 90°C with stirring, constant temperature reaction was performed for 2 hours, 38mL (0.48mol) of epichlorohydrin was then added, the constant temperature reaction at 90°C was continued for 0.5h, a filter pressing was implemented, the filtration product was washed with hexane for 5 times, the filtration product was finally subjected to drying in vacuum to obtain an olefin polymerization catalyst carrier. Upon gas chromatography-mass spectrometry, nuclear magnetic resonance (NMR), and elemental analysis, the alkoxy magnesium carrier was determined to contain a component represented by the following formula: $(C_2H_5O)Mg[(OCH(CH_2Cl)(CH_2Cl)$.

The catalyst carrier had an average particle diameter (D50) of 61 μm and a particle size distribution ((D90-D10)/D50) of 1.3.

(2) Preparation of olefin polymerization catalyst component

100mL of titanium tetrachloride was added in a 300mL glass reactor bottle, cooled to -20°C, 0.04mol of the catalyst carrier was added, and stirred at -20°C for 30min. Thereafter, the temperature was slowly raised to 110°C, 1.9 mmol of tributyl phosphate and 6 mmol of diethyl 2,3-diisopropyl-2-cyanosuccinate were added during the temperature rise process, the temperature was maintained at 110°C for 30min, the liquid was subsequently filtered off. Titanium tetrachloride was then added to wash the catalyst component twice, finally washed the catalyst component with hexane three times, and dried to obtain an olefin polymerization catalyst b.

(3) Propylene polymerization reaction

The air in a 5L stainless steel autoclave was purged with a nitrogen gas stream, 1mmol of triethyl aluminum, 0.05mmol of methyl cyclohexyl dimethoxy silane, 10mL of anhydrous hexane, 10mg of the prepared olefin polymerization catalyst b (containing 0.0069mmol of titanium), 1.5L (standard volume) of hydrogen gas, and 2.5L of liquid propylene were subsequently introduced into the nitrogen gas stream. The temperature was increased to 70°C, the reaction was conducted at the temperature for 1 hour, the temperature was decreased, the pressure was released, and the reaction product was output and dried to prepare a polypropylene powder.

Example A7

(1) The magnesium chloride alcoholate carrier was prepared by repeating the process of Example Al;
(2) Preparation of olefin polymerization catalyst component
50mL of titanium tetrachloride was added in a 300mL glass reactor bottle, cooled to 0°C, 0.04mol of magnesium halide adduct was added and stirred at 0°C for 30min. Thereafter, the temperature was slowly raised to 115°C, 0.76 mmol of tributyl phosphate and 6 mmol of diethyl 2,3-dicyclohexyl-2-cyanosuccinate were added during the temperature rise process, the temperature was maintained at 115°C for 30min, the liquid was subsequently filtered off. Titanium tetrachloride was then added to wash the catalyst component twice, finally washed the catalyst component with hexane three times, and dried to obtain an olefin polymerization catalyst c.
(3) The propylene polymerization reaction was performed with catalyst c by repeating the process of Example A1.

Example A8

(1) The magnesium chloride alcoholate carrier was prepared by repeating the process of Example Al;
(2) Preparation of olefin polymerization catalyst component
120mL of titanium tetrachloride was added in a 300mL glass reactor bottle, cooled to -15°C, 0.04mol of magnesium halide adduct was added and stirred at -15°C for 30min. Thereafter, the temperature was slowly raised to 90°C, 0.76 mmol of tributyl phosphate and 6 mmol of diethyl 2,3-diisopropyl-2-cyanosuccinate were added during the temperature rise process, the temperature was maintained at 90°C for 30min, the liquid was subsequently filtered off. Titanium

tetrachloride was then added for washing the catalyst component twice, finally washed the catalyst component with hexane three times, and dried to obtain an olefin polymerization catalyst d.

(3) The propylene polymerization reaction was performed with catalyst d by repeating the process of Example A1.

Example A9

(1) The magnesium chloride alcoholate carrier was prepared by repeating the process of Example Al;

(2) Preparation of olefin polymerization catalyst component

115mL of titanium tetrachloride was added in a 300mL glass reactor bottle, cooled to 0°C, 0.04mol of magnesium halide adduct was added and stirred at 0°C for 30min. Thereafter, the temperature was slowly raised to 95°C, 0.76mmol of tributyl phosphate and 6mmol of diethyl 2-isopropyl 3-phenyl-2-cyanobutanedioate were added during the temperature rise process, and the temperature was maintained at 95°C for 30min, the liquid was subsequently filtered off. Titanium tetrachloride was then added for washing the catalyst component twice, finally washed the catalyst component with hexane three times, and dried to obtain an olefin polymerization catalyst e.

(3) The propylene polymerization reaction was performed with catalyst e by repeating the process of Example A1.

Example A10

(1) The magnesium chloride alcoholate carrier was prepared by repeating the process of Example Al;

(2) Preparation of olefin polymerization catalyst component

110mL of titanium tetrachloride was added in a 300mL glass reactor bottle, cooled to 0°C, 0.04mol of magnesium halide adduct was added and stirred at 0°C for 30min. Thereafter, the temperature was slowly raised to 112°C, 0.76mmol of tributyl phosphate and 6mmol of diethyl-2-isopropyl-3-cyclopentyl-2-cyanosuccinate were added during the temperature rise process, and the temperature was maintained at 112°C for 30min, the liquid was subsequently filtered off. Titanium tetrachloride was then added to wash the catalyst component twice, finally washed the catalyst component with hexane three times, and dried to obtain an olefin polymerization catalyst f.

(3) The propylene polymerization reaction was performed with catalyst f by repeating the process of Example A1.

Example A11

The catalyst was prepared according to the method in Example A3, except that the type of phosphate ester was varied, and the tributyl phosphate was replaced by an equimolar trioctyl phosphate.

Comparative Example Al

The catalyst was prepared according to the method in Example A1, except that tributyl phosphate was not added.

Comparative Example A2

The catalyst was prepared according to the method in Example A1, except that the diethyl 2,3-diisopropyl-2-cyanosuccinate was replaced by an equimolar diisobutyl phthalate.

Comparative Example A3

The catalyst was prepared according to the method in Example A5, except that the diethyl 2,3-diisopropyl-2-cyanosuccinate was replaced by an equimolar diisobutyl phthalate.

Comparative Example A4

4.8g of anhydrous magnesium chloride (0.05mol), 100ml of toluene, 4.0ml of epichlorohydrin (0.05mol), and 6ml of tributyl phosphate (0.022mol) were added sequentially to a reaction kettle where the air was repeatedly replaced with high purity nitrogen gas, the reaction was performed at a temperature of 60°C for 3 hours, 1.4g of phthalic anhydride was added, the reaction was continued for 1 hour, the temperature was decreased to -29°C, 56 ml of titanium tetrachloride was dropwise added, the temperature was gradually increased to 85°C, 7.5mmol of diethyl 2,3-diisopropyl-2-cyanosuccinate

was added during the temperature rise process, a constant temperature of 85°C was kept for 1 hour, the mother liquor was filtered off, toluene was used for washing twice, 48 ml of titanium tetrachloride and 72 ml of toluene solution were further added, a constant temperature of 110°C was kept for 0.5 hour, the treatment was repeated twice after filtration, then washed with hexane five times, the remaining solid product was subjected to drying in vacuum to obtain a solid titanium catalyst component DC4.

The propylene polymerization was performed by using the solid titanium catalyst component DC4 according to step (3) in Example A1.

Comparative Example A5

The catalyst was prepared according to the method in Comparative Example A2, except that the tributyl phosphate was not added.

Tables 1-2 illustrated the molar ratio of the components in the catalyst component and the angle of repose of the catalyst component in the aforementioned Examples and Comparative Examples, as well as the Mz+1, Mz+1/Mn, MFR, isotactic index, (dw/dlogM)/peak height when logMW=3 of the polymers after polymerization for 1h in Examples and Comparative Examples.

Table 1

| Catalysts | $n_{p:\ Mg}$ | $n_{CN:\ Mg}$ | $n_{Ti:\ Mg}$ | Mz+1 | Mz+1/Mn | MFR (g/10min) |
|---|---|---|---|---|---|---|
| Example A1 | 0.00024 | 0.0867 | 0.138 | 6005467 | 124.19 | 0.81 |
| Example A2 | 0.00034 | 0.0918 | 0.134 | 6178735 | 126.54 | 0.72 |
| Example A3 | 0.00111 | 0.0924 | 0.131 | 6289476 | 128.47 | 0.67 |
| Example A4 | 0.00184 | 0.0912 | 0.128 | 6289476 | 128.56 | 0.6 |
| Example A5 | 0.00199 | 0.0890 | 0.128 | 6184672 | 126.78 | 0.71 |
| Example A6 | 0.00063 | 0.0924 | 0.128 | 6282195 | 129.94 | 0.82 |
| Example A7 | 0.00039 | 0.0867 | 0.134 | 6216248 | 127.19 | 0.73 |
| Example A8 | 0.00040 | 0.0901 | 0.131 | 6230362 | 127.69 | 0.72 |
| Example A9 | 0.00042 | 0.0845 | 0.131 | 6229147 | 128.56 | 0.75 |
| Example A10 | 0.00043 | 0.0896 | 0.125 | 6180546 | 127.69 | 0.76 |
| Example A11 | 0.00101 | 0.0930 | 0.133 | 6109131 | 120.46 | 0.97 |
| Comparative Example A1 | 0 | 0.0907 | 0.141 | 3902596 | 97.69 | 5.6 |
| Comparative Example A2 | 0.0003 | 0 | 0.0781 | 3502702 | 51.16 | 6.2 |
| Comparative Example A3 | 0.0004 | 0 | 0.0750 | 3500113 | 50.73 | 6.5 |
| Comparative Example A4 | 0.0121 | 0.0839 | 0.122 | 2827281 | 91.24 | 6.8 |
| Comparative Example A5 | 0 | 0 | 0.0719 | 3502303 | 52.22 | 6.2 |

$n_{p:\ Mg}$ denotes the molar ratio of phosphate ester to elemental magnesium, $n_{CN:\ Mg}$ denotes the molar ratio of α-cyanosuccinate and/or substituted α-cyanosuccinate to elemental magnesium, $n_{Ti:\ Mg}$ denotes the molar ratio of elemental titanium to elemental magnesium.

Table 2

| Catalysts | Activity after 1h (kgPP/g·Cat) | The angle of repose (°) | Isotacticity index (wt%) | (dw/dlogM)/peak height×($10^{-3}$) when logMW=3 |
|---|---|---|---|---|
| Example A1 | 32.1 | 34.6 | 97.1 | 5.9 |
| Example A2 | 33.2 | 34.3 | 97.2 | 5.6 |
| Example A3 | 33.0 | 34.0 | 97.3 | 5.2 |
| Example A4 | 31.9 | 34.1 | 97.3 | 5.1 |

(continued)

| Catalysts | Activity after 1h (kgPP/g·Cat) | The angle of repose (°) | Isotacticity index (wt%) | (dw/dlogM)/peak height×($10^{-3}$) when logMW=3 |
|---|---|---|---|---|
| Example A5 | 30.8 | 34.3 | 97.4 | 5.1 |
| Example A6 | 31.3 | 34.4 | 97.3 | 5.2 |
| Example A7 | 28.1 | 34.5 | 97.0 | 5.5 |
| Example A8 | 27.3 | 34.2 | 97.0 | 5.4 |
| Example A9 | 26.5 | 34.5 | 96.8 | 5.4 |
| Example A10 | 33.9 | 34.4 | 96.7 | 5.8 |
| Example A11 | 32.8 | 34.7 | 97.0 | 5.0 |
| Comparative Example A1 | 33.2 | 39.2 | 97.0 | 8.2 |
| Comparative Example A2 | 38.4 | - | - | - |
| Comparative Example A3 | 35.6 | - | - | - |
| Comparative Example A4 | 15.6 | - | 96.1 | 11.2 |
| Comparative Example A5 | 38.6 | - | - | - |

In the above table, MW refers to the molecular weight of the polymer, logMW is defined as the x-coordinate of the GPC curve, dw/dlogM is defined as the y-coordinate of the GPC curve, and the peak height mentioned above refers to the maximum value of dw/dlogM.

As can be seen from Tables 1-2:

(1) The polypropylene obtained by polymerizing the catalyst component for 1h has higher Mz+1 and Mz+1/Mn, which means that the polypropylene has a high content of macromolecular fraction, which is beneficial to forming more frenulums / intercrystalline bridging chains in the polymer and endowing the product with desirable properties (e.g., creep resistance, balance of rigidity and toughness). Further, the polymer of the invention has a low MFR.

(2) When the polypropylene obtained by polymerizing the catalyst component for 1h is subjected to the GPC test and logMW=3, the ratio of (dw/dlogM)/peak height of the polypropylene is lower than the polypropylene without adding phosphate ester, it indicates that the polypropylene obtained by adding phosphate ester has a lower content of low molecular weight fraction, which is beneficial for its use in the medical care and public health field (it has less precipitates when used as food and medical appliances).

(3) In contrast to the Comparative Examples 2-3 (the phosphate ester and phthalate ester compound are compounded as an internal electron donor), the product obtained by compounding phosphate ester and cyanosuccinate diester as an internal electron donor has an excellent synergistic effect, the invention can significantly increase Mz+1 and Mz+1/Mn of the polymer and decreases MFR of the polymer, such that the product prepared with the polymer has excellent creep resistance and balance of rigidity and toughness, thereby widening the application fields of polypropylene.

(4) The catalyst components of Examples A1 - A11 have desirable morphology and are substantially free of cracking phenomenon. The catalyst components of the invention have a smaller angle of repose, indicating that the prepared catalysts exhibit better flowability, are not prone to bridge, and ensure smooth configuration and transportation of the catalysts during the production process, which is more favorable for smooth operation of the production process.

The Example B below served to illustrate a preparation method of a catalyst component by using phosphate ester/$\alpha$-cyanosuccinate and/or substituted $\alpha$-cyanosuccinate and bis-alkoxy substituted alkane as an internal electron donor, and a process of preparing a polymer.

Example B1

(1) The magnesium chloride alcoholate carrier was prepared according to step (1) of Example Al.

(2) Preparation of olefin polymerization catalyst component

50mL of titanium tetrachloride was added in a 300mL glass reactor bottle, cooled to -20°C, and 0.04mol of magnesium chloride alcoholate carrier was added and stirred at 0°C for 60 min. Thereafter, the temperature was slowly raised to 100°C, 0.76mmol of tributyl phosphate, 1mmol of 2-isopropyl-2-isopentyl-1,3-dimethoxypropane, and 4.5mmol of diethyl 2,3-diisopropyl-2-cyanosuccinate were added during the temperature rise process, the temperature was maintained at 100°C for 60min, the liquid was subsequently filtered off. Titanium tetrachloride was then added to wash the catalyst component twice, finally washed the catalyst component with hexane three times, and dried to obtain the catalyst.

In the catalyst, the molar ratio of phosphate ester to elemental magnesium was 0.00035, the molar ratio of $\alpha$-cyanosuccinate and/or substituted $\alpha$-cyanosuccinate to elemental magnesium was 0.07197, the molar ratio of bis-alkoxy substituted alkane to elemental magnesium was 0.02044, the molar ratio of elemental titanium to elemental magnesium was 0.1051. The catalyst had an angle of repose of 33.2°.

(3) Propylene polymerization reaction

The air in a 5L stainless steel autoclave was purged with a nitrogen gas stream, 1mmol of triethyl aluminum, 0.05mmol of methyl cyclohexyl dimethoxy silane, 10mL of anhydrous hexane, 10mg of the prepared catalyst (containing 0.008mmol of titanium), 1.5L (standard volume) of hydrogen gas, and 2.5L of liquid propylene were subsequently introduced into the nitrogen gas stream. The temperature was increased to 70°C, the reaction was conducted at the temperature for 1 hour, the temperature was decreased, the pressure was released, and the reaction product was output and dried to prepare a polypropylene powder.

The polymerization activity after 1h was 45.6kgPP/g·Cat, the polypropylene powder had a Mz+1 of 6,294,397, a ratio Mz+1/Mn of 128.39, a MFR of 1.1 g/10min, a bulk density of 0.48 g/$cm^3$. When LogMW=3, the ratio of dw/dlogM to peak height $\times$ ($10^{-3}$) was 4.6, wherein MW denoted the molecular weight of the polymer, logMW was defined as the x-coordinate of the GPC curve, and dw/dlogM was defined as the y-coordinate of the GPC curve, and the peak height indicated the maximum value of dw/dlogM.

Example B2

The catalyst was prepared according to the method in Example B1, except that tributyl phosphate was used in an amount of 1.9mmol, 2-isopropyl-2-isopentyl-1,3-dimethoxypropane was used in an amount of 4mmol, and the diethyl 2,3-diisopropyl-2-cyanosuccinate was used in an amount of 2mmol.

In the catalyst, the molar ratio of phosphate ester to elemental magnesium was 0.00186, the molar ratio of $\alpha$-cyanosuccinate and/or substituted $\alpha$-cyanosuccinate to elemental magnesium was 0.03172, the molar ratio of bis-alkoxy substituted alkane to elemental magnesium was 0.06569, the molar ratio of elemental titanium to elemental magnesium was 0.0838. The catalyst had an angle of repose of 33.6°.

The polymerization activity after 1h was 55.8kgPP/g·Cat, the polypropylene powder had a Mz+1 of 5,069,700, a ratio of Mz+1/Mn being 81.58, a MFR of 3.1 g/10min, a bulk density of 0.48 g/$cm^3$. When LogMW=3, the ratio of dw/dlogM to peak height $\times$ ($10^{-3}$) was 4.9, wherein MW denoted the molecular weight of the polymer, logMW was defined as the x-coordinate of the GPC curve, and dw/dlogM was defined as the y-coordinate of the GPC curve, and the peak height indicated the maximum value of dw/dlogM.

The use of the method in Example B of the invention and the use of phosphate ester/$\alpha$-cyanosuccinate and/or substituted $\alpha$-cyanosuccinate and bis-alkoxy substituted alkane as an internal electron donor, the prepared polymer has higher Mz+1 and Mz+1/Mn, and the polymerization activity can be further improved.

Compared with Example A, when the polymer prepared in Example B of the invention has logMW=3 in the GPC test, the ratio of dw/dlogM to the peak height of the GPC curve is lower, which indicates that the polymer has a lower content of the low molecular weight fraction, which is beneficial for its use in the medical care and public health field (it has less precipitates when used as food and medical appliances). In addition, the polymer prepared in the invention has a higher bulk density and has an extremely promising prospect of industrial application.

The comparison results of Example B1 and Example B2 indicate that Example B1 in the preferred dosage range can simultaneously balance the Mz+1 and Mz+1/Mn and the polymerization activity of said polymer.

The above content describes in detail the preferred embodiments of the present disclosure, but the present disclosure is not limited thereto. A variety of simple modifications can be made in regard to the technical solutions of the present disclosure within the scope of the technical concept of the present disclosure, including a combination of individual technical features in any other suitable manner, such simple modifications and combinations thereof shall also be regarded as the content disclosed by the present disclosure, each of them falls into the protection scope of the present disclosure.

## Claims

1. A catalyst component for olefin polymerization, is **characterized in that** the catalyst component comprises elemental magnesium, elemental titanium, and an internal electron donor; the internal electron donor comprises a phosphate ester, and an α-cyanosuccinate and/or a substituted α-cyanosuccinate, a molar ratio of the phosphate ester to the elemental magnesium is (0.0002-0.002):1.

2. The catalyst component according to claim 1, wherein a molar ratio of the phosphate ester to the α-cyanosuccinate and/or substituted α-cyanosuccinate is 1:(15-500), preferably 1: (40-400).

3. The catalyst component according to claim 1 or 2, wherein the phosphate ester comprises at least one selected from the group consisting of a hydrocarbyl ester of phosphoric acid, a halogenated hydrocarbyl ester of phosphoric acid, a hydrocarbyl ester of phosphorous acid, and a halogenated hydrocarbyl ester of phosphorous acid; preferably, the hydrocarbyl ester of phosphoric acid comprises at least one of monohydrocarbyl phosphate, dihydrocarbyl phosphate, and trihydrocarbyl phosphate, more preferably a tri-$C_1$-$C_{10}$ alkyl phosphate; further preferably, the tri-$C_1$-$C_{10}$ alkyl phosphate comprises at least one selected from the group consisting of tributyl phosphate, trimethyl phosphate, triethyl phosphate, and tripropyl phosphate.

4. The catalyst component according to any one of claims 1-3, wherein the α-cyanosuccinate and/or substituted α-cyanosuccinate is at least one selected from the compounds represented by formula (III):

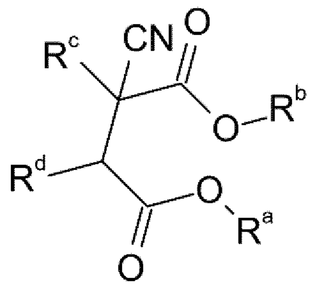

formula (III);

in the formula (III), $R^a$ and $R^b$ are each independently selected from $C_1$-$C_{14}$ straight chain alkyl, $C_3$-$C_{14}$ branched chain alkyl, $C_3$-$C_{10}$ cycloalkyl, $C_6$-$C_{10}$ aryl, $C_7$-$C_{10}$ alkaryl, or $C_7$-$C_{10}$ aralkyl; $R^c$ and $R^d$ are each independently selected from H, $C_1$-$C_{14}$ straight chain alkyl, $C_3$-$C_{14}$ branched chain alkyl, $C_3$-$C_{10}$ cycloalkyl, $C_6$-$C_{10}$ aryl, $C_7$-$C_{10}$ alkaryl, or $C_7$-$C_{10}$ aralkyl; $R^c$ and $R^d$ are optionally bonded to each other to synthesize one or more condensed ring structures; preferably in formula (III), $R^a$ and $R^b$ are each independently selected from $C_1$-$C_{10}$ straight chain alkyl, $C_3$-$C_{10}$ branched chain alkyl, $C_3$-$C_{10}$ cycloalkyl, $C_6$-$C_{10}$ aryl, $C_7$-$C_{10}$ alkaryl, or $C_7$-$C_{10}$ aralkyl; $R^c$ and $R^d$ are each independently selected from $C_1$-$C_{10}$ straight chain alkyl, $C_3$-$C_{10}$ branched chain alkyl, $C_3$-$C_{10}$ cycloalkyl, $C_6$-$C_{20}$ aryl, $C_7$-$C_{20}$ alkaryl, or $C_7$-$C_{20}$ aromatic hydrocarbon.

5. The catalyst component according to any one of claims 1-4, wherein a molar ratio of the α-cyanosuccinate and/or substituted α-cyanosuccinate to the elemental magnesium is (0.01-0.2):1, preferably (0.03-0.15):1, more preferably (0.04-0.11): 1.

6. The catalyst component according to any one of claims 1-5, wherein the internal electron donor further comprises a bis-alkoxy substituted alkane, preferably the bis-alkoxy substituted alkane is at least one selected from $(R^7)(R^8)C(OR^9)(OR^{10})$, wherein $R^7$ and $R^8$ are each independently selected from hydrogen, $C_1$-$C_{20}$ alkyl, $C_3$-$C_{20}$ cycloalkyl, $C_6$-$C_{20}$ aryl, $C_7$-$C_{20}$ aralkyl, or $C_7$-$C_{10}$ alkaryl, $R^7$ and $R^8$ are optionally bonded to form a ring; $R^9$ and $R^{10}$ are each independently selected from $C_1$-$C_{20}$ alkyl;
preferably, the bis-alkoxy substituted alkane is at least one selected from $(R^7)(R^8)C(OR^9)(OR^{10})$, wherein $R^7$ and $R^8$ are each independently selected from hydrogen, $C_1$-$C_{10}$ alkyl, $C_3$-$C_{10}$ cycloalkyl, $C_6$-$C_{10}$ aryl, $C_7$-$C_{10}$ aralkyl, or $C_7$-$C_{10}$ alkaryl, $R^7$ and $R^8$ are optionally bonded to form a ring; $R^9$ and $R^{10}$ are each independently selected from $C_1$-$C_{10}$ alkyl.

7. The catalyst component according to claim 6, wherein a molar ratio of the bis-alkoxy substituted alkane to the elemental magnesium is (0.001-0.15):1, preferably (0.01-0.1): 1;
and/or, a molar ratio of the phosphate ester to the bis-alkoxy substituted alkane is 1:(30-400), preferably 1:(50-350).

**8.** The catalyst component according to any one of claims 1-7, wherein the source of elemental magnesium is a magnesium-containing carrier comprising a magnesium chloride alcoholate carrier and/or a magnesium alkoxylate carrier;

preferably, the magnesium chloride alcoholate carrier comprises a component represented by formula (I),

$MgY^1Y^2 \cdot mR'OH$ formula (I)

in formula (I), $Y^1$ is selected from halogen, preferably from chlorine or bromine; $Y^2$ is selected from halogen, alkyl, or alkoxy; R' is selected from one of halogen substituted or unsubstituted alkyl, halogen substituted or unsubstituted cycloalkyl, halogen substituted or unsubstituted aralkyl; m is within the range of 1-5;
preferably, the magnesium alkoxylate carrier comprises a component represented by formula (II):

$[R_1O]_{m'} \cdot Mg[OCH(CHXR_2)(R_3)]_n$ formula (II);

in formula (II), $R_1$ is selected from one of straight chain alkyl or halogen substituted straight chain alkyl, branched chain alkyl or halogen substituted branched chain alkyl, cycloalkyl or halogen substituted cycloalkyl; $R_2$ and $R_3$ are each independently one of hydrogen, straight chain alkyl or halogen substituted straight chain alkyl, branched chain alkyl or halogen substituted branched chain alkyl; X is halogen; m' is within the range of 0.1-1.9, n is within the range of 0.1-1.9, m' + n = 2;
and/or, the source of elemental titanium is titanium halide, which is at least one selected from the compounds represented by $Ti(OR^4)_{4-n}X'_n$, wherein $R^4$ is selected from $C_1$-$C_{20}$ hydrocarbyl, preferably selected from $C_1$-$C_{14}$ aliphatic group, repeated X' is the same or different, and each is independently selected from F, Cl, or Br, and n is an integer of 0-4;
preferably, the titanium halide is selected from one of titanium tetrachloride, titanium tetrabromide, titanium tetraiodide, tetrabutoxytitanium, tetraethoxytitanium, titanium monochlorotributoxide, titanium dichlorodibutoxide, titanium trichlorobutoxide, titanium monochlorotriethoxide, titanium dichlorodiethoxide, titanium trichloromonoethoxide, titanium trichloride, or a mixture thereof, more preferably titanium tetrachloride;
and/or, a molar ratio of the elemental titanium to the elemental magnesium is (0.01-0.3):1, preferably (0.06-0.15): 1.

**9.** A method for preparing a catalyst component for olefin polymerization, is **characterized in that** the method comprises: mixing a magnesium-containing carrier, titanium halide, and an internal electron donor, wherein the internal electron donor comprises a phosphate ester, and an α-cyanosuccinate and/or a substituted α-cyanosuccinate, the phosphate ester, and the magnesium-containing carrier are used in amounts such that the molar ratio of the phosphate ester in the obtained catalyst component to the magnesium-containing carrier calculated in terms of elemental magnesium is (0.0002-0.002):1.

**10.** The method according to claim 9, wherein the process of mixing the magnesium-containing carrier, the titanium halide, and the internal electron donor comprises the following steps: (1) mixing the magnesium-containing carrier with the titanium halide; (2) blending the system of step (1) with the internal electron donor;
preferably, the internal electron donor further comprises a bis-alkoxy substituted alkane.

**11.** The method according to claim 10, wherein the mixing operation of step (1) is carried out at a temperature from -30°C to 0°C, preferably from -25°C to -15°C;
and/or, initially carrying out a heating treatment in step (2), and adding the internal electron donor in the heating process; preferably, the temperature is raised to the range from 80°C to 120°C, more preferably the range from 90°C to 115°C.

**12.** The method according to claim 10, wherein the α-cyanosuccinate and/or substituted α-cyanosuccinate and the magnesium-containing carrier are used in amounts such that the molar ratio of the α-cyanosuccinate and/or substituted α-cyanosuccinate in the obtained catalyst component to the magnesium-containing carrier calculated in terms of elemental magnesium is (0.01-0.2):1, preferably (0.03-0.15):1, more preferably (0.04-0.11): 1;

and/or, the phosphate ester and the α-cyanosuccinate and/or substituted α-cyanosuccinate are used in amounts such that the molar ratio of the phosphate ester in the obtained catalyst component to the α-cyanosuccinate and/or substituted α-cyanosuccinate is 1:(15-500), preferably 1: (40-300);
and/or, the bis-alkoxy substituted alkane and the magnesium-containing carrier are used in amounts such that the

molar ratio of the bis-alkoxy substituted alkane in the obtained catalyst component to the magnesium-containing carrier calculated in terms of elemental magnesium is (0.001-0.15):1, preferably (0.01-0.1): 1;
and/or, the phosphate ester and the bis-alkoxy substituted alkane are used in amounts such that the molar ratio of the phosphate ester in the obtained catalyst component to the bis-alkoxy substituted alkane is 1:(30-400), preferably 1:(50-350).

**13.** A catalyst system for olefin polymerization, is **characterized in that** the catalyst system comprises:

(1) the catalyst component according to any one of claims 1-8 and/or the catalyst component prepared with the method according to any one of claims 9-12;
(2) alkylaluminum; and
(3) optionally an external electron donor.

**14.** The catalyst system according to claim 13, wherein the alkylaluminum contains 1-3 alkyl groups, the alkyl is $C_1$-$C_8$ alkyl, preferably the alkylaluminum is at least one selected from the group consisting of triethyl aluminum, tripropyl aluminum, tri-n-butyl aluminum, triisobutyl aluminum, tri-n-octyl aluminum, monohydrodiethyl aluminum, monohydrodiisobutyl aluminum, monochlorodiethyl aluminum, monochlorodiisobutyl aluminum, sesquiethyl aluminum chloride, and dichloroethyl aluminum;

and/or, the external electron donor is at least one selected from silicon-containing compounds, preferably at least one selected from the group consisting of cyclohexyl methyl dimethoxy silane, diisopropyl dimethoxy silane, di-n-butyl dimethoxy silane, diisobutyl dimethoxy silane, diphenyl dimethoxy silane, methyl-t-butyl dimethoxy silane, dicyclopentyl dimethoxy silane, 2-ethyl piperidinyl-2-t-butyl dimethoxysilane, (1,1,1-trifluoro-2-propyl)-2-ethylpiperidinyl dimethoxy silane, (1,1,1-trifluoro-2-propyl) -methyl dimethoxy silane;
preferably, a molar ratio of the catalyst component to the alkylaluminum is 1:(15-718), and/or a molar ratio of the catalyst component to the external electron donor is 1:(1-111), wherein the mole number of the catalyst component is calculated in terms of the mole number of the elemental Ti contained herein.

**15.** Use of the catalyst component according to any one of claims 1-8, and/or the catalyst component prepared with the method according to any one of claims 9-12, and/or the catalyst system according to claims 13 or 14 in the olefin polymerization.

**16.** An olefin polymerization method, is **characterized in that** the olefin polymerization method comprises the following steps: performing an olefin polymerization reaction in the presence of the catalyst component according to any one of claims 1-8, and/or the catalyst component prepared with the method according to any one of claims 9-12, and/or the catalyst system according to claim 13 or 14;

preferably, the olefin is selected from at least one compound represented by the formula $CH_2$=CHR, wherein R is hydrogen, or $C_1$-$C_6$ straight chain alkyl, or $C_3$-$C_6$ branched chain alkyl;
preferably, the polymerization conditions comprise a temperature of 0-150°C, a time of 0.1-8 hours, and a pressure of 0.01-10 MPa.

## INTERNATIONAL SEARCH REPORT

International application No.
**PCT/CN2023/126144**

**A. CLASSIFICATION OF SUBJECT MATTER**

C08F10/00(2006.01)i；C08F10/06(2006.01)i；C08F4/649(2006.01)i；C08F4/654(2006.01)i

According to International Patent Classification (IPC) or to both national classification and IPC

**B. FIELDS SEARCHED**

Minimum documentation searched (classification system followed by classification symbols)

IPC:C08F10,C08F4

Documentation searched other than minimum documentation to the extent that such documents are included in the fields searched

Electronic data base consulted during the international search (name of data base and, where practicable, search terms used)

CNKI, CNTXT, ENTXT, DWPI, ISI web of Knowledge: 烯烃, 丙烯, 聚合, 催化剂, 磷酸酯, 氰基, 丁二酸, 琥珀酸, Z+1, 分子量, olefin, propylene, polymer+, cataly+, phosphate, cyano+, succinate

**C. DOCUMENTS CONSIDERED TO BE RELEVANT**

| Category* | Citation of document, with indication, where appropriate, of the relevant passages | Relevant to claim No. |
|---|---|---|
| A | CN 109111535 A (CHINA PETROLEUM & CHEMICAL CORP.; BEIJING RESEARCH INSTITUTE OF CHEMICAL INDUSTRY, CHINA PETROLEUM & CHEMICAL CORP.) 01 January 2019 (2019-01-01)<br>entire document | 1-16 |
| A | CN 102311513 A (CHINA PETROLEUM & CHEMICAL CORP.; BEIJING RESEARCH INSTITUTE OF CHEMICAL INDUSTRY, CHINA PETROLEUM & CHEMICAL CORP.) 11 January 2012 (2012-01-11)<br>entire document | 1-16 |
| A | CN 112661881 A (CHINA PETROLEUM & CHEMICAL CORP.; BEIJING RESEARCH INSTITUTE OF CHEMICAL INDUSTRY, CHINA PETROLEUM & CHEMICAL CORP.) 16 April 2021 (2021-04-16)<br>entire document | 1-16 |
| A | CN 107629153 A (CHINA PETROLEUM & CHEMICAL CORP.; BEIJING RESEARCH INSTITUTE OF CHEMICAL INDUSTRY, CHINA PETROLEUM & CHEMICAL CORP.) 26 January 2018 (2018-01-26)<br>entire document | 1-16 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **04 January 2024** | **10 January 2024** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**

International application No.
**PCT/CN2023/126144**

**C. DOCUMENTS CONSIDERED TO BE RELEVANT**

| Category* | Citation of document, with indication, where appropriate, of the relevant passages | Relevant to claim No. |
|---|---|---|
| A | CN 107344978 A (CHINA PETROLEUM & CHEMICAL CORP.; BEIJING RESEARCH INSTITUTE OF CHEMICAL INDUSTRY, CHINA PETROLEUM & CHEMICAL CORP.) 14 November 2017 (2017-11-14) entire document | 1-16 |

Form PCT/ISA/210 (second sheet) (July 2022)

**INTERNATIONAL SEARCH REPORT**
**Information on patent family members**

International application No.
**PCT/CN2023/126144**

| Patent document cited in search report | | | Publication date (day/month/year) | Patent family member(s) | | | Publication date (day/month/year) |
|---|---|---|---|---|---|---|---|
| CN | 109111535 | A | 01 January 2019 | CN | 109111535 | B | 16 March 2021 |
| CN | 102311513 | A | 11 January 2012 | CN | 102311513 | B | 06 February 2013 |
| CN | 112661881 | A | 16 April 2021 | CN | 112661881 | B | 13 December 2022 |
| CN | 107629153 | A | 26 January 2018 | CN | 107629153 | B | 07 April 2020 |
| CN | 107344978 | A | 14 November 2017 | CN | 107344978 | B | 09 June 2020 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202211302325
- CN 202211322445
- CN 1453298 A
- CN 1313869 A
- CN 102146146 A
- CN 1718595 A
- CN 1151183 C
- CN 1267508 C
- CN 1463990 A
- US 6020279 A
- CN 101811983 A
- CN 102372651 A
- CN 102603931 A
- WO 2010094211 A1